Europäisches Patentamt

European Patent Office

Office européen des brevets

(19)

(11) Numéro de publication: **0 086 691**
**B1**

(12) **FASCICULE DE BREVET EUROPEEN**

(45) Date de publication du fascicule du brevet:
**27.01.88**

(51) Int. Cl.⁴: **F 16 B 21/04, B 62 M 9/12**

(21) Numéro de dépôt: **83400224.8**

(22) Date de dépôt: **02.02.83**

(54) Dispositif de fixation des deux ailes d'une chape de dérailleur de pédalier pour bicyclette.

(30) Priorité: **12.02.82 FR 8202325**

(43) Date de publication de la demande:
**24.08.83 Bulletin 83/34**

(45) Mention de la délivrance du brevet:
**27.01.88 Bulletin 88/4**

(84) Etats contractants désignés:
**BE DE GB IT LU NL**

(56) Documents cités:
**DE - A - 1 925 829**
**FR - A - 2 376 020**
**GB - A - 1 553 053**
**US - A - 3 335 471**
**US - A - 4 007 516**

(73) Titulaire: **SACHS-HURET S.A., 60, Avenue Félix Faure,
F-92000 Nanterre (FR)**

(72) Inventeur: **Coue, Maurice, 6 résidence du Vieux Puits,
F-78810 Feucherolles (FR)**

(74) Mandataire: **Moncheny, Michel et al, c/o Cabinet
Lavoix 2 Place d'Estienne d'Orves, F-75441 Paris
Cedex 09 (FR)**

ACTORUM AG

**Description**

La présente invention concerne les dispositifs de fixation de deux pièces entre elles et se rapporte plus particulièrement à un dispositif de fixation rapide destiné à être utilisé principalement, bien que non exclusivement, pour la fixation entre elles des extrémités d'une chape de dérailleur de pédalier pour bicyclette.

Un dérailleur de pédalier comporte généralement une chape de guidage et de déplacement de la chaîne d'un plateau sur un autre, ladite chape étant montée sur un support solidaire du cadre de la bicyclette par l'intermédiaire d'une articulation à parallélogramme déformable.

La chape comporte une âme par laquelle elle est articulée sur le support et des ailes en forme de branches allongées dont les extrémités arrière sont réunies entre elles par un dispositif de fixation.

Les dispositifs de fixation classiques comportent une entretoise tubulaire insérée entre les deux branches, traversée par une vis engagée dans les orifices prévus dans les branches. La vis est immobilisée par un écrou de serrage avec interposition d'une rondelle de freinage d'écrou.

Un tel dispositif est constitué de quatre pièces. Il est donc d'un montage relativement long.

On connaît également d'après le brevet GB-A-1 553 053 un dispositif de fixation de deux plaques entre elles. Ce dispositif comprend une fiche traversant les deux plaques et une entretoise à être insérée entre les deux plaques quand le dispositif est monté. Le maintien de ce dernier et assuré, d'une part par la tête de la fiche qui coopère avec une face d'une première plaque et, d'autre part, par deux saillies latérales prévues à l'extrémité de la fiche opposée à la tête, ces saillies latérales coopérant avec la face correspondante de la deuxième plaque. L'ouverture prévue dans cette dernière est rectangulaire et d'une section nettement plus importante que la section de la partie traversante de la fiche de sorte que cette deuxième plaque est susceptible de pouvoir se déplacer librement par rapport à la fiche en raison de l'importante section de l'ouverture rectangulaire.

On connaît encore d'après le brevet DE-A-1 925 829 un dispositif de fixation à cheville comprenant une fiche traversant un panneau et s'étendant dans un trou ménagé dans un corps. Pour retenir cette fiche dans le trou et donc le panneau sur le corps à l'aide d'une tête élargie prévue sur la fiche, une cheville est emmanchée à force dans ce trou et la fiche traverse la cheville. La fiche est verrouillée en position dans cette dernière grâce à une saillie latérale prévue à l'extrémité correspondante de cette fiche qui coopère par rotation de la fiche avec une butée formée sur la cheville. Toutefois, ce dispositif ne permet de maintenir espacées l'une de l'autre les deux pièces qu'il fixe entre elles.

L'invention vise à remédier à ces inconvénients des dispositifs connus en créant un dispositif de fixation qui présente un nombre de pièces réduit et qui de ce fait soit, d'une part d'une fabrication moins coûteuse et, d'autre part, d'un montage plus rapide que les dispositifs connus.

Elle a donc pour objet un dispositif de fixation l'une à l'autre des deux ailes notamment d'une chape de dérailleur de pédalier pour bicyclette comprenant une entretoise interposée entre lesdites première et seconde ailes et un organe de fixation associé à ladite entretoise, ledit organe de fixation étant constitué par une fiche engagée dans des trous ménagés dans lesdites première et seconde ailes et pourvue à l'une de ses extrémités d'une tête destinée à coopérer avec la face extérieure de la première aile et à son autre extrémité d'une saillie latérale destinée à venir en prise avec la face extérieure de la seconde aile par rotation de la fiche, les trous ménagés dans les première et seconde ailes comportant des passages pour ladite saillie latérale lors du montage de la fiche, caractérisé en ce que ladite fiche comporte une première portion voisine de ladite tête, destinée à être engagée dans le trou ménagé dans ladite première aile, une portion de plus forte section formant entretoise, une seconde portion portant ladite saillie latérale et destinée à être engagée dans le trou ménagé dans ladite seconde aile, le trou ménagé dans la première aile étant adapté pour être traversé par ladite entretoise, cette dernière étant immobilisée dans sa position verrouillée entre les ailes de la chape, par rotation de la fiche par rapport au trou ménagé dans la première aile.

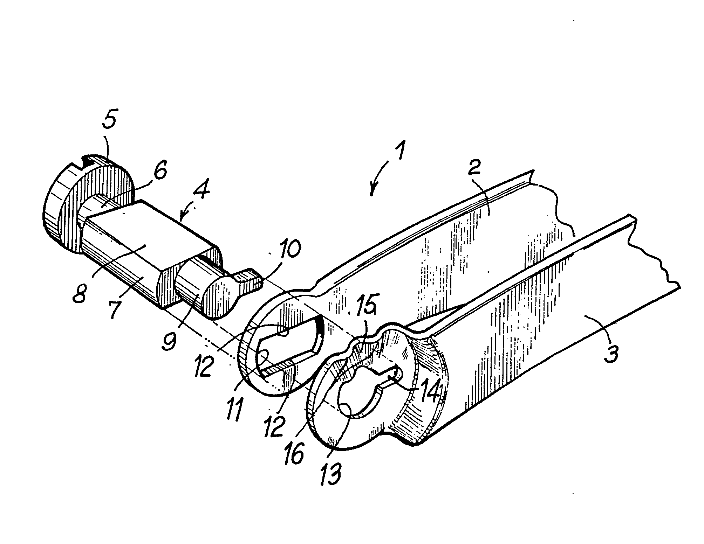

D'autres caractéristiques de l'invention apparaîtront à la lecture des revendications secondaires annexées et au cours de la description qui va suivre, faite en référence au dessin annexé, donné uniquement à titre d'exemple et sur lequel:

— la figure unique est une vue partielle en perspective éclatée montrant en détail le dispositif de fixation suivant l'invention des ailes d'une chape de dérailleur de pédalier pour bicyclette.

La chape illustrée sur la figure et désignée dans son ensemble par la référence 1 comporte deux ailes 2, 3 reliées entre elles, de manière connue en soi par une âme non illustrée sur cette figure.

Les extrémités arrière des ailes 2, 3 sont fixées l'une à l'autre au moyen d'un dispositif de fixation conforme à l'invention, formant un organe de retenue pour la chaîne de la bicyclette.

Ce dispositif de fixation est constitué par une fiche 4 qui comporte une tête 5, une première portion cylindrique 6, une portion 7 de section plus importante comportant deux méplats tels que 8, une seconde portion cylindrique 9 pourvue à son extrémité d'une saillie latérale 10. En position montée, la première portion cylindrique 6 est destinée à être engagée dans un trou ménagé dans l'aile 2 de la chape. Le trou 11 présente une section correspondant à la section de la portion 7 de la fiche qui forme entretoise. Le trou 11 présente deux méplats 12 correspondant aux méplats 8 de la partie 7. La seconde portion cylindrique 9 de la fiche 4 est destinée à être engagée dans un trou circulaire 13 ménagé dans l'extrémité de l'autre aile 3 de la chape. La saillie latérale 10 de la fiche est destinée à prendre appui contre la face extérieure de l'extrémité de l'aile 3 après être passée par une encoche 14 du trou 3. L'immobilisation de la fiche 4 en position de fixation est assurée par la venue de la saillie latérale 10 en prise avec une ondulation 15 ménagée dans l'extrémité de l'aile 5. L'ondulation 15 est constituée par un creux formé entre deux bourrelets 16 de telle façon que le creux se trouve au niveau général de la surface extérieure de la périphérie du trou circulaire 13. Ainsi, lors du verrouillage, la saillie latérale 10 de la tige doit passer par dessus les bourrelets 16 pour redescendre dans le creux 15. Donc, en position verrouillée, la fiche 4 est maintenue en place sans aucun jeu transversal.

La fiche 4 est avantageusement réalisée en métal ou en matière plastique, ce qui permet, en surdimensionnant légèrement les portions de la fiche destinées à être engagées dans les trous 11 et 13 des ailes de la chape, de mettre en place ladite fiche en forçant légèrement, ce qui du fait du contact entre la matière plastique et le métal réduit tout risque de trépidations.

On voit qu'en position verrouillée, la portion intermédiaire 7 formant entretoise a tourné d'un certain angle par rapport au trou 11 de l'aile 2 de la chape et est donc immobilisée entre les ailes 2 et 3.

Le dispositif de fixation qui vient d'être décrit présente vis-à-vis des dispositifs connus, un nombre de pièces réduit et n'implique que de légères modifications des extrémités des ailes de la chape qui peuvent être réalisées lors de la fabrication de celle-ci.

Il est par ailleurs d'un montage aisé et rapide, ce qui contribue à la réduction du prix de revient de la chape dans son ensemble. Son démontage est aussi très simple.

Bien que le dispositif de fixation rapide suivant l'invention soit appliqué à des chapes de dérailleurs de pédalier pour bicyclettes, il peut bien entendu être utilisé dans tous types d'application où deux pièces comportant des portions planes doivent être fixées ensemble, à une distance déterminée l'une de l'autre.

**Revendications**

1. Dispositif de fixation l'une à l'autre des deux ailes (2, 3), notamment d'une chape de dérailleur de pédalier pour bicyclette, comprenant une entretoise (7) interposée entre lesdites première (2) et seconde (3) ailes et un organe de fixation associé à ladite entretoise, ledit organe de fixation étant constitué par une fiche (4) engagée dans des trous (11, 13) ménagés dans lesdites première et seconde ailes et pourvue à l'une de ses extrémités d'une tête (5) destinée à coopérer avec la face extérieure de la première aile (2) et à son autre extrémité d'une saillie latérale (10) destinée à venir en prise avec la face extérieure de la seconde aile (3) par rotation de la fiche, les trous ménagés dans les première et seconde ailes comportant des passages (14) pour ladite saillie latérale lors du montage de la fiche, caractérisé en ce que ladite fiche comporte une première portion (6) voisine de ladite tête (5), destinée à être engagée dans le trou (11) ménagé dans ladite première aile (2), une portion de plus forte section (7) formant entretoise, une seconde portion (9) portant ladite saillie latérale (10) et destinée à être engagée dans le trou (13) ménagé dans ladite seconde aile (3), le trou (11) ménagé dans la première aile (2) étant adapté pour être traversé par ladite entretoise, cette dernière étant immobilisée dans sa position verrouillée entre les ailes de la chape, par rotation de la fiche par rapport au trou (11) ménagé dans la première aile.

2. Dispositif suivant la revendication 1, caractérisé en ce que le trou (13) ménagé dans la seconde aile est circulaire, les première et deuxième portions (6, 9) étant cylindriques et le passage ménagé dans ledit trou pour la saillie latérale étant constitué par une encoche (14) ménagée dans la périphérie de ce trou.

3. Dispositif suivant la revendication 1 ou 2, caractérisé en ce que ladite entretoise (7) présente deux méplats (8) et le trou (11) ménagé dans ladite première aile (2) présente des méplats (12) correspondants.

4. Dispositif suivant l'une quelconque des revendications 1 à 3, caractérisé en ce qu'il comporte des moyens de verrouillage de la fiche en position de fixation constitués par ladite saillie latérale (10) de ladite fiche (4) engagée par rotation dans un creux (15) ménagé dans la seconde aile (3) à la périphérie du trou (13) ménagé dans celle-ci.

5. Dispositif suivant la revendication 4, caractérisé en ce que ledit creux (15) est ménagé entre deux renflements (16) par rapport à la surface de la périphérie dudit trou (13) ménagé dans ladite seconde aile.

6. Dispositif suivant l'une quelconque des revendications précédentes, caractérisé en ce que ladite fiche est réalisée en métal ou en matière plastique.

**Claims**

1. A device for attaching to one another the two wings (2, 3) more particularly of a gearshift cover for the pedals and bottom bracket bearing assembly of a bicycle, comprising a strut (7) interposed between the first (2) and second (3) wings and an attaching member associated with the strut, the attaching member being formed by a pin (4) engaging in holes (11, 13) with which the first and second wings are formed and having at one of its ends a head (5) adapted to cooperate with the outer surface of the first wing (2) and at its other end a lateral projection (10) adapted to engage with the outer surface of the second wing (3) by rotation of the pin, the holes with which the first and second wings are formed comprising passages (14) for the lateral projection during the assembly of the pin, characterized in that the pin comprises a first portion (6) which is adjacent the head (5) and is adapted to engage in the hole (11) with which the first wing (2) is formed, a thicker section (7) forming a strut, and a second portion (9) bearing the lateral projection (10) and adapted to engage in the hole (13) with which the second wing (3) is formed, the hole (11) with which the first wing (2) is formed being adapted for the strut to extend therethrough, the strut being immobilized in its locked position between the wings of the cover by rotation of the pin in relation to the hole (11) with which the first wing is formed.

2. A device according to Claim 1, characterized in that the hole (13) with which the second wing is formed is circular, the first and second portions (6, 9) is cylindrical, and the passage with which the hole (13) is formed for the lateral projection being formed by a notch (14) with which the periphery of the hole (13) is formed.

3. A device according to Claim 1 or 2, characterized in that the strut (7) has two flat portions (8) and the hole (11) with which the first wing (2) is formed has matching flat portions (12).

4. A device according to any of Claims 1 to 3, characterized in that it comprises means for locking the pin in the attached position, such means being formed by the lateral projection (10) of the pin (4) engaging by rotation in a hollow in the periphery of the hole (13) with which the second wing (3) is formed.

5. A device according to Claim 4, characterized in that the hollow (15) is formed between two swellings (16) in relation to the surface of the periphery of the hole (13) with which the second wing (3) is formed.

6. A device according to any of the preceding Claims, characterized in that the pin is made of metal or plastics.

## Patentansprüche

1. Einrichtung zur gegenseitigen Befestigung zweier Stege (2, 3) aneinander, insbesondere Stege eines Gabelbügels für eine Tretlager-Kettenschaltung eines Fahrrades, umfassend eine zwischen dem ersten (2) und dem zweiten Steg (3) angeordnete Verbindungsstrebe (7) und ein der Verbindungsstrebe zugeordnetes Befestigungsorgan, wobei dieses Befestigungsorgan aus einem in im ersten und zweiten Steg ausgebildete Löcher (11, 13) eingreifenden Steckbolzen (4) gebildet ist, welcher an einem Ende mit einem mit der Aussenseite des ersten Steges (2) zusammenwirkenden Kopf (5) und an seinem anderen Ende mit einem seitlich abstehenden Vorsprung (10) versehen ist, der für einen Wirkeingriff mit der Aussenseite des zweiten Steges (3) bei Drehung des Steckbolzens bestimmt ist, und wobei die im ersten und zweiten Steg ausgebildeten Löcher jeweils einen Durchtritt (14) für den seitlichen Vorsprung bei der Montage des Steckbolzens aufweisen, dadurch gekennzeichnet, dass der Steckbolzen einen ersten, dem Kopf (5) benachbarten Abschnitt (6) für den Eingriff in das im ersten Steg (2) ausgebildete Loch (11) aufweist, ferner einen die Verbindungsstrebe bildenden Abschnitt (7) mit vergrössertem Querschnitt und einen zweiten, den seitlichen Vorsprung tragenden und für den Eingriff in das im zweiten Steg (3) ausgebildete Loch (13) bestimmten Abschnitt (9), wobei das im ersten Steg (2) ausgebildete Loch (11) eine für einen Durchtritt der Verbindungsstrebe angepasste Form hat und diese letztere in ihrer zwischen den Stegen des Gabelbügels verriegelten Lage durch Verdrehen des Steckbolzens bezüglich des im ersten Steg ausgebildeten Loches (11) festgehalten wird.

2. Einrichtung nach Anspruch 1, dadurch gekennzeichnet, dass das im zweiten Steg ausgebildete Loch (13) kreisförmig ist, wobei der erste und der zweite Abschnitt (6, 9) zylindrisch sind und der an diesem Loch vorgesehene Durchtritt für den seitlichen Vorsprung durch einen Einschnitt (14) im Rand dieses Loches gebildet ist.

3. Einrichtung nach Anspruch 1 oder 2, dadurch gekennzeichnet, dass die Verbindungsstrebe (7) zwei Abflachungen (8) aufweist und dass auch das im ersten Steg (2) ausgebildete Loch entsprechende Abflachungen hat.

4. Einrichtung nach einem der Ansprüche 1 bis 3, dadurch gekennzeichnet, dass sie Mittel zum Verriegeln des Steckbolzens in seiner Befestigungslage umfasst, welche durch den seitlichen Vorsprung (10) des Steckbolzens (4) gebildet sind, der durch Drehung in eine Vertiefung (15) eingreift, die am zweiten Steg (3) am Rand des in diesem ausgebildeten Loches (13) gebildet ist.

5. Einrichtung nach Anspruch 4, dadurch gekennzeichnet, dass die Vertiefung (15) zwischen zwei Gegenüber der Randfläche des im zweiten Steg (3) ausgebildeten Loches (13) vorstehenden Wülsten (16) gebildet ist.

6. Einrichtung nach einem der vorstehenden Ansprüche, dadurch gekennzeichnet, dass der Steckbolzen aus Metall oder aus Plastikmaterial besteht.